# EUROPEAN PATENT SPECIFICATION

(11) **EP 4 215 569 B1**
(45) Date of publication and mention of the grant of the patent: **30.10.2024**
(21) Application number: 21891524.7
(22) Date of filing: 04.10.2021
(51) Int. Cl.: C08J 5/00, C08J 7/00, C08G 65/40, C08G 65/46

(54) **PEEK MOLDED BODY AND METHOD FOR PRODUCING SAME**
PEEK-FORMKÖRPER UND VERFAHREN ZUR HERSTELLUNG DAVON
CORPS MOULÉ EN PEEK ET SON PROCÉDÉ DE PRODUCTION

(30) Priority: 13.11.2020 JP 2020189246
(43) Date of publication of application: 26.07.2023
(73) Proprietor: Kabushiki Kaisha Riken, Tokyo 102-8202 (JP)
(72) Inventor: MAKABE, Takeshi, Kumagaya-shi, Saitama 360-8522 (JP); AKAOKA, Taichi, Kumagaya-shi, Saitama 360-8522 (JP)
(74) Representative: Markfort, Iris-Anne Lucie
(86) International application number: PCT/JP2021/036585
(87) International publication number: WO 2022/102277

(56) References cited:
- WO-A1-2015/019047
- JP-A- 2004 339 484
- JP-A- 2005 174 897
- JP-A- 2005 174 897
- JP-A- 2011 249 093
- JP-A- 2011 249 093
- JP-A- 2016 133 763
- JP-A- 2016 133 763
- JP-A- H05 202 207
- JP-A- H05 202 207
- LI H M ET AL: "The Effects of Polyetheretherketone and Polyethersulfone of Electron and Irradiation", IEEE TRANSACTIONS ON DIELECTRICS AND ELECTRICAL INSULATION, IEEE SERVICE CENTER, PISCATAWAY, NJ, US, vol. 6, no. 3, 1 June 1999 (1999-06-01), pages 295 - 302, XP011084286, ISSN: 1070-9878
- SASUGA T ET AL: "Ion irradiation effects on thermal and mechanical properties of poly(ether-ether-ketone) (PEEK)", POLYMER, vol. 41, no. 1, 1 January 2000 (2000-01-01), pages 185 - 194, XP085617482, ISSN: 0032-3861, DOI: 10.1016/S0032-3861(99)00143-3

## Description

### Technical Field

The present invention relates to a PEEK molded body that can be used for various parts and a method of producing the same.

### Background Art

In the field of industrial machinery, there is a demand to replace a metal part with a resin molded body from the viewpoint of weight reduction, or the like. Super engineering plastics having particularly excellent heat resistance and mechanical strength, typified by polyetheretherketone (PEEK), are used for the production of such a resin molded body (see, for example, Patent Literature 1).

### Citation List

### Patent Literature

Patent Literature 1: Japanese Patent Application Laid-open No. 2011-111091

### Disclosure of Invention

### Technical Problem

However, in the case of parts used in particularly severe operating environments, such as sliding members and gear members, it is difficult to stably achieve sufficient performance even with PEEK molded bodies. Therefore, in order to make the PEEK molded body more widely available in the field of industrial machinery, it is desired to further improve the performance of the PEEK molded body.

In view of the circumstances as described above, it is an object of the present invention to provide a technology capable of further improvement of the performance of a PEEK molded body.

### Solution to Problem

In order to achieve the above-mentioned object, a PEEK molded body according to an embodiment of the present invention includes: a body portion; and a surface layer portion.

The body portion has a first exothermic peak, and a second exothermic peak positioned at a higher temperature than the first exothermic peak, as two exothermic peaks indicating crystallization of PEEK in a DSC curve.

The surface layer portion covers the body portion, and has a third exothermic peak, positioned at a higher temperature than the first exothermic peak, as an only exothermic peak indicating crystallization of PEEK in a DSC curve.

In this PEEK molded body, the amount of PEEK having a lower molecular weight is reduced in the surface layer portion forming a surface than in the body position inside the surface layer portion. As a result, in this PEEK molded body, since high mechanical strength can be achieved in the surface layer portion, it is possible to suppress the progress of wear and the occurrence of chipping.

Meanwhile, in this PEEK molded body, since the body portion in which PEEK having a lower molecular weight remains retains the shock absorbing property, the shock applied to the surface layer portion is absorbed by the body portion. As a result, in this PEEK molded body, since a large stress is hard to locally apply to the surface layer portion, it is possible to further suppress the occurrence of damage.

A thickness of the surface layer portion may be 50 um or more.

The PEEK molded body may include a sliding member.

The PEEK molded body may include a gear member.

A method of producing a PEEK molded body according to an embodiment of the present invention includes the steps of: preparing a molded body, a DSC curve of the molded body having two exothermic peaks indicating crystallization of PEEK; and applying an electron beam to a surface of the molded body.

With this configuration, by applying an electron beam, it is possible to reduce the amount of PEEK having a low average molecular weight in the surface layer portion forming a surface.

In the process of applying the above electron beam, it may form a surface layer portion which only have one exothermic peak indicating the crystallization of PEEK in the DSC curve.

In the process of applying the above electron beam, the molded body may be heated.

### Advantageous Effects of Invention

As described above, in the present invention, it is possible to provide a technology capable of further improvement of the performance of a PEEK molded body.

### Brief Description of Drawings

[Fig. 1] Fig. 1 is a flowchart showing the method of producing a PEEK molded body according to an embodiment of the present invention;
[Fig. 2] Fig. 2 is a plan view showing an example in which the PEEK molded body includes a gear member.
[Fig. 3] Fig. 3 is a graph showing a DSC curve of a surface layer portion of each of PEEK molded bodies according to Examples and a Comparative Example.
[Fig. 4] Fig. 4 is a graph showing a DDSC curve of a surface layer portion of each of the PEEK molded bodies according to the Examples and the Comparative Example.

### Mode(s) for Carrying Out the Invention

### [Description of PEEK molded body]

The present invention relates to a PEEK molded body that is a molded body of polyetheretherketone (PEEK). In the present invention, by controlling the molecular weight of PEEK forming a PEEK molded body, the performance of the PEEK molded body is improved. In an embodiment of the present invention, the average molecular weight of PEEK is determined by differential scanning calorimetry (DSC).

Specifically, in the DSC curve of the process of cooling from a molten state of 350°C or higher, an exothermic peak indicating crystallization of PEEK appearing in the temperature range of 250 to 300°C is detected. As a result, it can be seen that PEEK having a higher crystallization temperature at which an exothermic peak appears has a larger average molecular weight and PEEK having a lower crystallization temperature at which an exothermic peak appears has a lower average molecular weight.

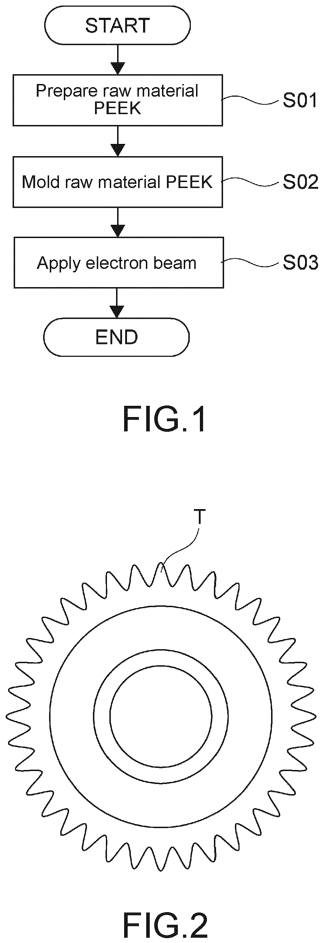

Fig. 1 is a flowchart showing the method of producing a PEEK molded body according to this embodiment. First, in Step S01 according to this embodiment, a raw material PEEK is prepared. The raw material PEEK prepared in Step S01 is PEEK whose DSC curve has two exothermic peaks indicating crystallization of PEEK.

In this embodiment, such a raw material PEEK is regarded as a mixture of two types of PEEK, i.e., PEEK having a relatively larger average molecular weight and PEEK having a relatively low average molecular weight. The raw material PEEK may be produced by mixing two types of PEEK or may use a commercially available product that has been formed as a mixture in advance.

Next, in Step S02, the raw material PEEK prepared in Step S01 is molded. For molding the raw material PEEK, for example, a known molding method such as injection molding and extrusion molding can be used. As a result, in Step S02, a molded body including a mixture of two types of PEEK, similarly to the raw material PEEK, can be obtained.

That is, in the DSC curve of the molded body of the raw material PEEK obtained in Step S02, two exothermic peaks which indicate the crystallization of the PEEK appear, the first exothermic peak at a lower temperature and the second exothermic peak at a higher temperature. Note that the positions and shapes of the two exothermic peaks appearing in the DSC curve may differ from each other before and after the raw material PEEK is molded.

Then, in Step S03, an electron beam is applied to the surface of the molded body of the raw material PEEK obtained in Step S02. As a result, in the molded body of the raw material PEEK, cross-linking of PEEK molecules having a low molecular weight is selectively promoted by the electron beam that has entered the surface, and a surface layer portion with reduced amount of PEEK with lower molecular weight is formed.

The application conditions of the electron beam in Step S03 can be determined appropriately. For example, the irradiation dose of the electron beam is favorably 50 kGy or more so that the effect of promoting cross-linking described above can be easily achieved. Further, it is favorable to limit the irradiation dose of the electron beam to 200 kGy or less in order to prevent decomposition of the molecular chain of PEEK from progressing.

By Step S03, a PEEK molded body according to this embodiment, which includes a body portion that is not affected by the application of electron beam and a surface layer portion with reduced amount of PEEK with lower molecular weight by the application of electron beam, is obtained. Different exothermic peaks appear in the DSC curves of the body portion and the surface layer portion of the PEEK molded body according to this embodiment.

Specifically, in the DSC curve of the body portion, the first exothermic peak and the second exothermic peak indicating crystallization of PEEK appear similarly to the molded body of the raw material PEEK before the application of an electron beam. Meanwhile, in the surface layer portion, the first exothermic peak appearing in the DSC curve is lowered as much as the amount of the reduction of PEEK with low molecular weight, which corresponds to the first exothermic peak, due to the application of an electron beam.

It is favorable that in the PEEK molded body, the first exothermic peak is low enough to be regarded as disappearing in the DSC curve of the surface layer portion, in order to achieve the effect of the application of the electron beam more effectively. That is, in the DSC curve of the surface layer portion, the appearance of only the individual third exothermic peak, positioned at a higher temperature than the first exothermic peak, is favorable.

Here, in this embodiment, the presence of the exothermic peak is determined by the presence of the downward convex peak, in which the slope in a DDSC curve obtained by differentiating the DSC curve, changes from decreasing to increasing in the process of cooling. That is, in this embodiment, the exothermic peak of the DSC curve and the downward convex peak of the DDSC curve have one-to-one correspondence.

In the PEEK molded body according to this embodiment, by reducing the amount of PEEK having a low molecular weight in the surface layer portion, it is possible to increase the mechanical strength of the area around the surface where stress tends to concentrate. As a result, in the PEEK molded body according to this embodiment, it is possible to suppress the progress of wear and the occurrence of chipping in the area around the surface formed by the surface layer portion.

Further, in the PEEK molded body according to this embodiment, since the shock absorbing property of the body portion in which PEEK having a low molecular weight remains are retained, the shock applied to the surface layer portion is well absorbed. As a result, since a large stress is hard to locally apply to the surface layer portion in the PEEK molded body according to this embodiment, it is possible to suppress the occurrence of damage more effectively.

As described above, in the PEEK molded body according to this embodiment, by applying an electron beam, it is possible to increase the mechanical strength of only the surface layer portion without impairing the flexibility of the body portion derived from PEEK with low molecular weight contained in the raw material PEEK. As a result, in the PEEK molded body according to this embodiment, the effect of suppressing the occurrence of damage by a synergistic effect of the surface layer portion and the body portion is achieved.

The thickness of the surface layer portion in the PEEK molded body according to this embodiment can be appropriately determined in accordance with the application or the like. For example, from the viewpoint of ensuring the effect of the surface layer portion described above, it is favorable to set the thickness of the surface layer portion to 50 um or more. On the other hand, from the viewpoint of achieving the shock absorbing property of the body portion more effectively, it is favorable to limit the thickness of the surface layer portion to 700 µm or less.

The thickness of the surface layer portion in the PEEK molded body can be variously controlled by changing the application conditions of the electron beam. However, since large-scale equipment is necessary to increase the thickness of the surface layer portion, it is favorable to limit the thickness of the surface layer portion to 700 µm or less, also from the viewpoint of keeping the production cost low without using large-scale equipment.

Further, in Step S03 in this embodiment, it is favorable to apply an electron beam while heating the molded body of the raw material PEEK. As a result, in the PEEK molded body according to this embodiment, the effect of improving the mechanical strength of the surface layer portion is more likely to be achieved, and it is possible to further improve the breaking property, for example.

The PEEK molded body according to this embodiment is particularly suitable for application to parts where stress tends to concentrate on the surface thereof. Examples of such a part include a sliding member such as a seal ring and a thrust washer. In the PEEK molded body, composed as a sliding member, it is possible to reduce the friction loss as well as suppressing the occurrence of damage.

Further, the PEEK molded body according to this embodiment is particularly suitable also for application to a gear member as shown in Fig. 2, for example. In the gear member, stress tends to concentrate on the tooth roots of multiple teeth T, consecutively connected along the outer circumference, but it is possible to effectively suppress the occurrence of chipping of the teeth T by forming the gear member as the PEEK molded body according to this embodiment.

### [Examples and Comparative Example]

### (Outline description)

Examples and Comparative Example of the embodiment mentioned above will be described. In the Examples 1 to 6 and the Comparative Example, samples of a PEEK molded body was prepared and each of the samples was evaluated. In each of the Examples 1 to 6 and the Comparative Example, "VESTAKEEP (registered trademark) 4000G" manufactured by Daicel-Evonik Ltd. was used as a raw material PEEK.

In the Examples 1 to 6, an electron beam was applied to a molded body obtained by molding the raw material PEEK under different application conditions. For the application of an electron beam, "EC300/30/30mA" manufactured by IWASAKI ELECTRIC CO., LTD was used. Note that in each of the Examples 1 to 6, the acceleration voltage was set to 290 kV, the beam current was set to 6.3 mA, and the convey speed was set to 8 m/min.

Further, in the Comparative Example, no electron beam was applied to the molded body of the raw material PEEK unlike the Examples 1 to 6 described above. That is, the molded body of the raw material PEEK before applying an electron beam was used as the sample according to the Comparative Example. Note that the samples according to the Examples 1 to 6 and the Comparative Example were common except for the configuration relating to the application of an electron beam.

### (Examples 1 to 3)

In the Examples 1 to 3, the sample temperature was kept constant and the irradiation dose of the electron beam was varied as application conditions of the electron beam. Specifically, the irradiation dose was set to 50 kGy in Example 1, the irradiation dose was set to 100 kGy in Example 2, and the irradiation dose was set to 200 kGy in Example 3. Further, in each of the Examples 1 to 3, the sample temperature was set at room temperature.

First, differential scanning calorimetry (DSC) was performed on test pieces taken from the area around the surfaces of the samples according to the Examples 1 to 3 and the Comparative Example. For the DSC, "DSC3500" manufactured by NETZSCH was used. In the DSC of each sample, two heating and cooling processes (1st run and 2nd run) were continuously performed.

More specifically, in the DSC of each sample, the temperature range for the 1st run was set at 20°C to 400°C and the temperature range for the 2nd run was set at 20°C to 500°C. Further, in both the 1st run and the 2nd run of the DSC of each sample, the rate in the heating process and the cooling process was set to 10°C/min.

First, for each of the samples according to the Examples 1 to 3 and the Comparative Example, the melting start point and the melting energy were obtained from the exothermic peak appearing in the DSC curve of the heating process of the 2nd run. As a result, Table 1 shows the rate of change (%) of the melting start point(°C) and the melting energy(J/G) in the Examples 1 to 3 with respect to the Comparative Example.

As shown in Table 1, in each of the Examples 1 to 3, the melting start point was higher than that in the Comparative Example and the melting energy was lower than that in the Comparative Example. From these results, it can be seen that in all the samples according to the Examples 1 to 3, PEEK has a higher molecular weight than the sample according to the Comparative Example due to the formation of a surface layer portion.

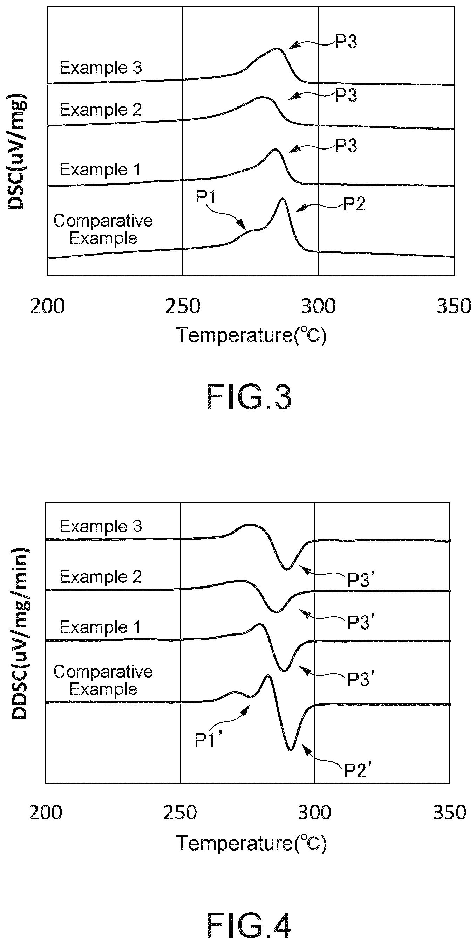

Next, for each of the samples according to the Examples 1 to 3 and the Comparative Example, the exothermic peak appearing in the DSC curve in the cooling process of the 2nd run was analyzed. Fig. 3 is a graph showing a DSC curve of each of the samples according to the Examples 1 to 3 and the Comparative Example. Further, Fig. 4 is a graph showing a DDSC curve of each sample obtained by differentiating the respective DSC curves shown in Fig. 3.

Referring to Fig. 3, it can be seen that in the sample according to the Comparative Example, the two exothermic peaks appearing in the DSC curve are the first exothermic peak P1 and the second exothermic peak P2. Meanwhile, it can be seen that in all the samples according to the Examples 1 to 3, the third exothermic peak, positioned at a higher temperature than the first exothermic peak P, is the only exothermic peak that appears in the DSC curve.

The presence of the first exothermic peak P1 and the second exothermic peak P2 of the sample according to the Comparative Example can be respectively confirmed by a downward convex first peak P1' and a downward convex second peak P2' of the DDSC curve shown in Fig. 4. Further, the third peak P3 of each of the samples according to the Examples 1 to 3 can be confirmed by a downward convex third peak P3' of the DDSC curve shown in Fig. 4.

From this DSC results, it can be seen that in each of the samples according to the Examples 1 to 3, a surface layer portion in which the amount of PEEK having a low molecular weight is reduced is formed as compared with the sample according to the Comparative Example. Note that the DSC curve of the body portion of each of the samples according to the Examples 1 to 3 was similar to the DSC curve of the sample according to the Comparative Example shown in Fig. 3.

Next, for each of the samples according to the Examples 1 to 3 and the Comparative Example, the D hardness of the surface was measured to evaluate the hardness. For the measurement of the D hardness, "GS-702G" manufactured by TECLOCK was used. In the measurement of the D hardness of each sample, the indentation load was set to 5 kgf and the other conditions were common.

As a result, Table 1 shows the rate of change (%) of the D hardness in the Examples 1 to 3 with respect to the Comparative Example. As shown in Table 1, it can be seen that in each of the samples according to the Examples 1 to 3, the D hardness of the surface is higher than that of the sample according to the Comparative Example, and high hardness can be achieved by the effect of the surface layer portion.

Next, a wear resistance test was performed on each of the samples according to the Examples 1 to 3 and the Comparative Example in order to evaluate the wear property. For the wear resistance test, a reciprocating sliding friction-wear tester "TRIBOGEAR TYPE-14" manufactured by Shinto Scientific Co., Ltd. was used. In the wear resistance test, each sample was formed into a strip shape of 10 mm × 80 mm × 0.1 mm.

Further, in the wear resistance test of each sample, a conical indenter (formed of sapphire, an included angle of 90°, a tip curvature radius of 0.05 mm) was used, the load was set to 150 gf, the sliding speed was set to 300 mm/min, the moving distance was set to 10 mm, and other conditions were also common. For each sample, "OK" and "NG" were determined by the presence of the wear of 100 um or more.

Table 1 shows the results for each number of reciprocations (10 reciprocations, 20 reciprocations, 30 reciprocations, and 40 reciprocations) for the Examples 1 to 3 and the Comparative Example. As shown in Table 1, favorable results were obtained up to 40 reciprocations in each of the samples according to the Examples 1 to 3 and a wear resistance property higher than that of the sample according to the Comparative Example, which was "NG" in 40 reciprocations, was achieved.

Next, a tensile test was performed on each of the samples according to the Examples 1 to 3 and the Comparative Example in order to evaluate the fracture property. For the tensile test, "AGX" manufactured by Shimadzu Corporation was used. In the tensile test, each sample was formed into an A12 type dumbbell shape conforming to JIS K7139 (2009). In the tensile test of each sample, the tensile speed was set to 10 mm/min and other conditions were also common.

As a result, Table 1 shows the rate of change (%) of the rupture strength in the Examples 1 to 3 with respect to the Comparative Example. As shown in Table 1, it can be seen that in each of the samples according to the Examples 1 to 3, the rupture strength is higher than that of the sample according to the Comparative Example and high rupture strength is achieved by the effect of the surface layer portion.

Next, a tear test was performed on each of the samples according to the Examples 1 to 3 and the Comparative Example in order to evaluate the fracture property. For the tear test, "AGX" manufactured by Shimadzu Corporation was used. In the tear test, each sample was formed into a strip shape (with a 1 mm notch) of 10 mm × 80 mm × 0.1 mm. In the tear test of each sample, the tensile speed was set to 10 mm/min and other conditions were also common.

As a result, Table 1 shows the rate of change (%) of the tear stroke in the Examples 1 to 3 with respect to the Comparative Example. As shown in Table 1, it can be seen that in each of the samples according to the Examples 1 to 3, the tear stroke is higher than that of the sample according to the Comparative Example and a large tear stroke is achieved by the effect to of the surface layer portion.

Next, a friction test was performed on each of the samples according to the Examples 1 to 3 and the Comparative Example in order to evaluate the friction property as sliding member. For the friction test, a reciprocating sliding friction-wear tester "TRIBOGEAR TYPE-14" manufactured by Shinto Scientific Co., Ltd. was used. In the friction test, each sample was formed into a strip shape of 10 mm × 80 mm × 0.1 mm.

Further, in the friction test of each sample, a spherical indenter (formed of SUS, ϕ4 mm) was used, the load was set to 100 gf, the sliding speed was set to 600 mm/min, the moving distance was set to 20 mm, and other conditions were also common. Further, grease (Sumitec F931) was used to lubricate the sliding surface on which the indenter slides in each sample.

As a result, Table 1 shows the rate of change (%) of the dynamic friction coefficient in the Examples 1 to 3 with respect to the Comparative Example. As shown in Table 1, it can be seen that in each of the samples according to the Examples 1 to 3, the dynamic friction coefficient was lower than that of the sample according to the Comparative Example and a high sliding property as a sliding member is achieved by the effect of the surface layer portion.

Next, a gear fatigue test was performed on each of the samples according to the Examples 1 to 3 and the Comparative Example in order to evaluate the fatigue property as a gear member. In the gear fatigue test, each sample was formed into a gear shape. In the gear fatigue test of each sample, a gear member (formed of S45C) was used as a mating member and the sample was rotationally driven while meshing with the mating member.

Further, in the gear fatigue test of each sample, the rotation speed was set to 2000 rpm, the torque was set to 6 N·m, and other conditions were also common. The lubrication state between each sample and the mating member during the rotational driving was dry. For each sample, "OK" and "NG" were determined by the presence of tooth chipping after 200,000 rotations.

Table 1 shows the results of gear fatigue tests for the Examples 1 to 3 and the Comparative Example. As shown in Table 1, no tooth chipping had occurred in each of the samples according to the Examples 1 to 3, whereas tooth chipping had occurred in the sample according to the Comparative Example. As a result, it can be seen that in the Examples 1 to 3, a high fatigue property as a gear member can be achieved.

**(Table 1)**

| | | Comparative Example | Example 1 | Example 2 | Example 3 |
|---|---|---|---|---|---|
| Application condition | Irradiation dose | - | 50kGy | 100kGy | 200kGy |
| | Temperature | - | Room temperature | Room temperature | Room temperature |
| Thermal property | Melting start point | - | +1.2% | +1.2% | +1,2% |
| | Melting energy | - | -21.3% | -19.0% | -18.3% |
| Hardness | D hardness | - | +1.2% | +3.6% | +2.4% |
| Wear property | 10 reciprocations | OK | OK | OK | OK |
| | 20 reciprocations | OK | OK | OK | OK |
| | 30 reciprocations | OK | OK | OK | OK |
| | 40 reciprocations | NG | OK | OK | OK |
| Fracture property | Rupture strength | - | +8.0% | +9.0% | +2.6% |
| | Tear stroke | - | +2.4% | +23.8% | +4.8% |
| Friction property | Dynamic friction coefficient | - | -24.2% | -19.7% | -22.7% |
| Fatigue property | Gear fatigue test | NG | OK | OK | OK |

### (Examples 4 to 6)

In the Examples 4 to 6, as for the application condition of the electron beam, the irradiation dose of the electron beam was similar to that in the Example 2, but the sample temperature has been changed from that in the Example 2. Specifically, the temperature was set to 200°C in the Example 4, 250°C in the Example 5, and 300°C in the Example 6. Further, in the Examples 4 to 6, the irradiation dose was set to 100 kGy similarly to the Example 2.

That is, for the Examples 4 to 6, the samples are heated while in Example 2, the sample temperature is at room temperature, so the application conditions of the electron beam differs. A tensile test was performed for each of the samples according to the Examples 4 to 6 in order to evaluate the fracture property. The conditions of the tensile test were similar to those in the Examples 1 to 3 and the Comparative Example.

As a result, Table 2 shows the rate of change (%) of the rupture strength in the Examples 2 and 4 to 6 with respect to the Comparative Example. As shown in Table 2, it can be seen that in each of the samples according to the Examples 4 to 6 in which an electron beam is applied while heating the sample, rupture strength is higher than that of the sample according to the Example 2 can be achieved.

**(Table 2)**

| | | Example 2 | Example 4 | Example 5 | Example 6 |
|---|---|---|---|---|---|
| Application condition | Irradiation dose | 100kGy | 100kGy | 100kGy | 100kGy |
| | Temperature | Room temperature | 200°C | 250°C | 300°C |
| Fracture property | Rupture strength | +9.0% | +9.3% | +13.1% | +29.6% |

## Claims

1. A PEEK molded body including a mixture of two types of PEEK, one PEEK having a larger average molecular weight and one PEEK have a lower average molecular weight, comprising:
a body portion having a first exothermic peak, and a second exothermic peak positioned at a higher temperature than the first exothermic peak, as two exothermic peaks indicating crystallization of PEEK in a DSC curve of a process of cooling; and
a surface layer portion that covers the body portion, and has due to an application of an electron beam to the surface layer portion a reduced amount of PEEK having a low average molecular weight a third exothermic peak, positioned at a higher temperature than the first exothermic peak, appearing as an only individual exothermic peak indicating crystallization of PEEK in a DSC curve of the process of cooling.

2. The PEEK molded body according to claim 1, wherein
a thickness of the surface layer portion is 50 um or more.

3. The PEEK molded body according to claim 1, which includes a sliding member.

4. The PEEK molded body according to claim 1, which includes a gear member.

5. A method of producing a PEEK molded body, comprising the steps of:
preparing a molded body including a mixture of two types of PEEK, one PEEK having a larger average molecular weight and one PEEK have a lower average molecular weight, having two exothermic peaks indicating crystallization of PEEK in a DSC curve of the process of cooling; and
applying an electron beam to a surface of the molded body, wherein
the applying an electron beam forms a surface layer portion appearing to have only one individual exothermic peak indicating crystallization of PEEK in a DSC curve of the process of cooling.

6. The method of producing a PEEK molded body according to claim 5, wherein
during the applying an electron beam, the molded body is heated.

## Patentansprüche

1. PEEK-Formkörper, der eine Mischung aus zwei PEEK-Typen enthält, wobei ein PEEK ein größeres durchschnittliches Molekulargewicht und ein PEEK ein geringeres durchschnittliches Molekulargewicht aufweist, umfassend:
einen Körperteil mit einer ersten exothermen Spitze und einer zweiten exothermen Spitze, die bei einer höheren Temperatur als die erste exotherme Spitze liegt, als zwei exotherme Spitzen, die die Kristallisation von PEEK in einer DSC-Kurve eines Abkühlungsprozesses anzeigen; und
einen Oberflächenschichtteil, der den Körperteil bedeckt und aufgrund der Anwendung eines Elektronenstrahls auf den Oberflächenschichtteil eine reduzierte Menge an PEEK mit einem niedrigen durchschnittlichen Molekulargewicht aufweist, eine dritten exothermen Spitze, die bei einer höheren Temperatur als die erste exotherme Spitze positioniert ist und als einzige individuelle exotherme Spitze erscheint, der die Kristallisation von PEEK in einer DSC-Kurve des Abkühlungsprozesses anzeigt.

2. PEEK-Formkörper nach Anspruch 1, wobei
die Dicke des Oberflächenschichtteils beträgt 50 µm oder mehr.

3. PEEK-Formkörper nach Anspruch 1, der ein Gleitelement enthält.

4. PEEK-Formkörper nach Anspruch 1, der ein Zahnradelement enthält.

5. Verfahren zur Herstellung eines PEEK-Formkörpers, das die folgenden Schritte umfasst:
Herstellen eines Formkörpers, der eine Mischung aus zwei Arten von PEEK enthält, wobei ein PEEK ein größeres durchschnittliches Molekulargewicht und ein PEEK ein geringeres durchschnittliches Molekulargewicht aufweist, mit zwei exothermen Spitzen, die die Kristallisation von PEEK in einer DSC-Kurve des Abkühlungsprozesses anzeigen; und
Anwendung eines Elektronenstrahls auf eine Oberfläche des Formkörpers, wobei
die Anwendung eines Elektronenstrahls bildet einen Oberflächenschichtteil, der nur eine einzelne exotherme Spitze zu haben scheint, die die Kristallisation von PEEK in einer DSC-Kurve des Abkühlungsprozesses anzeigt.

6. Verfahren zur Herstellung eines PEEK-Formkörpers nach Anspruch 5, wobei bei der Anwendung eines Elektronenstrahls der Formkörper erhitzt wird.

## Revendications

1. Un corps moulé en PEEK comprenant un mélange de deux types de PEEK, un PEEK ayant un poids moléculaire moyen plus élevé et un PEEK ayant un poids moléculaire moyen plus faible, comprenant :
une partie du corps présentant un premier pic exothermique et un second pic exothermique situé à une température plus élevée que le premier pic exothermique, deux pics exothermiques indiquant la cristallisation du PEEK dans une courbe DSC d'un processus de refroidissement ; et
une partie de la couche de surface qui recouvre la partie du corps, et qui, suite à l'application d'un faisceau d'électrons sur la partie de la couche de surface, présente une quantité réduite de PEEK ayant un faible poids moléculaire moyen, un troisième pic exothermique, positionné à une température plus élevée que le premier pic exothermique, apparaissant comme un seul pic exothermique individuel indiquant la cristallisation du PEEK dans une courbe DSC du processus de refroidissement.

2. Le corps moulé en PEEK selon la revendication 1, dans lequel
l'épaisseur de la partie de la couche de surface est de 50 µm ou plus.

3. Le corps moulé en PEEK selon la revendication 1, qui comprend un élément coulissant.

4. Le corps moulé en PEEK selon la revendication 1, qui comprend un élément d'engrenage.

5. Une méthode de production d'un corps moulé en PEEK, comprenant les étapes suivantes :
préparer un corps moulé comprenant un mélange de deux types de PEEK, un PEEK ayant un poids moléculaire moyen plus élevé et un PEEK ayant un poids moléculaire moyen plus faible, présentant deux pics exothermiques indiquant la cristallisation du PEEK dans une courbe DSC du processus de refroidissement ; et
appliquer un faisceau d'électrons à une surface du corps moulé, dans lequel
l'application d'un faisceau d'électrons forme une portion de couche superficielle qui semble ne présenter qu'un seul pic exothermique individuel indiquant la cristallisation du PEEK dans une courbe DSC du processus de refroidissement.

6. La méthode de production d'un corps moulé en PEEK selon la revendication 5, dans laquelle
pendant l'application d'un faisceau d'électrons, le corps moulé est chauffé.
